# EUROPÄISCHE PATENTSCHRIFT

(11) **EP 1 538 112 B1**
(45) Veröffentlichungstag und Bekanntmachung des Hinweises auf die Patenterteilung: **03.05.2006**
(21) Anmeldenummer: 04450088.2
(22) Anmeldetag: 14.04.2004
(51) Int. Cl.: B65G 15/60, B65G 21/04, B61B 7/00

(54) **Anlage zur Förderung von Gütern mittels eines endlosen Förderbandes**
Installation for conveying goods by means of an endless conveyor belt
Installation pour le transport de produits en moyen d'une bande transporteuse sans fins

(30) Priorität: 04.12.2003 AT 19422003
(43) Veröffentlichungstag der Anmeldung: 08.06.2005
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard

(56) Entgegenhaltungen:
- EP-A- 0 745 545
- EP-A- 0 972 728
- DE-A1- 2 150 938

## Beschreibung

Die gegenständliche Erfindung betrifft eine Anlage zur Förderung von Gütern mittels eines in sich geschlossenen Förderbandes, welches in den Endstationen über Umlenktrommeln geführt ist und welches mit Tragrollen ausgebildet ist, welche längs Tragseilen verfahrbar sind.

Bei einer derartigen aus der EP A2 745545 bekannten Anlage ist das Förderband mit zu diesem quer ausgerichteten Tragbalken ausgebildet, an deren Enden Tragrollen gelagert sind, welche längs in der Anlage vorgesehener Tragseile verfahrbar sind. Bekannte derartige Anlagen sind deshalb vorteilhaft, da durch die Tragseile große Spannweiten erzielt werden. Hierdurch kann bei diesen Anlagen auf die Errichtung einer Vielzahl von Traggerüsten verzichtet werden. Weiters können hierdurch derartige Anlagen auch in topographisch ungünstigen Lagen errichtet werden. Insbesondere ist es mit solchen Anlagen möglich, in einfacher Weise eine Förderung von Gütern über Hindernisse, wie Täler oder Flüsse, zu bewirken.

Diese bekannten Anlagen sind jedoch insoferne nachteilig, als sie für beide Trume des Förderbandes zwei Tragseile erfordern, welche abgestützt und abgespannt werden müssen, wodurch durch die Errichtung dieser Anlagen ein hoher konstruktiver Aufwand verursacht wird. Der gegenständlichen Erfindung liegt somit die Aufgabe zugrunde, eine derartige Anlage konstruktiv zu vereinfachen, ohne dass hierdurch deren Funktionsfähigkeit vermindert wird. Dies wird erfindungsgemäß dadurch erzielt, dass jedem Trum des Förderbandes nur ein einziges, oberhalb des betreffenden Trumes befindliches Tragseil zugeordnet ist und dass am Förderband nach oben abragende Tragbügel befestigt sind, an deren oberen Enden die längs der Tragseile abrollenden Tragrollen gelagert sind.

Vorzugsweise sind die in den Endstationen befindlichen Umlenktrommeln um angenähert vertikale Achsen verdrehbar. Weiters ist vorzugsweise das Förder band mit Wellkanten ausgebildet.

Nach einer bevorzugten Ausführungsform sind die Tragbügel abgewinkelt ausgebildet, wobei der angenähert waagrecht ausgerichtete Schenkel mit dem Förderband fest verbunden ist und am oberen Ende des von diesem Schenkel nach oben abragenden zweiten Schenkels mindestens eine Tragrolle gelagert ist. Weiters sind vorzugsweise in den Endstationen den Tragrollen zugeordnete Führungsschienen vorgesehen, mittels welcher die Tragbügel so geführt werden, dass das Förderband aus seiner angenähert horizontalen Lage in eine angenähert vertikale Lage verschwenkt wird, in welcher es um die Umlenktrommeln herumbewegt wird, worauf es wieder in die angenähert horizontale Lage verschwenkt wird, wobei bei beiden Trumen die Förderseite des Förderbandes nach oben gerichtet ist. Weiters ist vorzugsweise an jedem Tragbügel unterhalb der Tragrolle eine insbesondere aus Gummi hergestellte Führungsplatte vorgesehen.

Vorzugsweise sind weiters die Tragseile im Bereich der Stützen über Abstützungen geführt, welche in Längsrichtung der Tragseile verfahrbar sind und ist das Förderband im Bereich der Stützen über Stützwalzen geführt.

Eine erfindungsgemäße Anlage ist nachstehend anhand eines in der Zeichnung dargestellten Ausführungsbeispieles näher erläutert. Es zeigen:
- Fig. 1: eine erfindungsgemäße Anlage, in schematisierter Seitenansicht;
- Fig.2: einen Abschnitt des Förderbandes, in axonometrischer Darstellung;
- Fig.3: die rechte Endstation der Anlage gemäß Fig.1, mit einem Traggerüst, in axonometrischer Darstellung;
- Fig.4: die Endstation gemäß Fig.3, in gegenüber dieser vergrößerter Darstellung;
- Fig. 5: die Endstation gemäß Fig.3, in Draufsicht;
- Fig.6: das in dieser Endstation befindliches Traggerüst, in axonometrischer Darstellung;
- Fig.7: das in der linken Endstation gemäß Fig.1 vorgesehene Traggerüst, in Seitenansicht, und
- Fig.8: Details des Traggerüstes gemäß Fig.7, in axonometrischer Darstellung.

Eine erfindungsgemäße Anlage zur Förderung von Gütern weist zwei Endstationen 1 auf, zwischen welchen ein in sich geschlossenes Förderband 2 für den Transport von Schüttgütern, wie Baumaterialien, Abraummaterialien, Erzen u.dgl., bewegbar ist. Dabei dient die eine der Endstationen als Ladestation und die andere Endstation als Entladestation. Den beiden Trumen des Förderbandes 2 sind zwei Tragseile 3a, 3b zugeordnet, wobei das Förderband 2 mittels auf den Tragseilen 3 abrollender Tragrollen 4, welche auf Tragbügeln 5 gelagert sind, getragen ist und bewegt wird. In den Endstationen 1 und längs der Strecke sind Traggerüste 6 vorgesehen, über welche das Förderband 2 und die Tragseile 4 geführt sind. Weiters ist das Förderband 2 in den Endstationen 1 über Umlenktrommeln 7 geführt, welche um vertikal ausgerichtete Achsen verdrehbar sind. Dabei ist zumindest eine der Umlenktrommeln 7 mittels eines Antriebsmotors angetrieben.

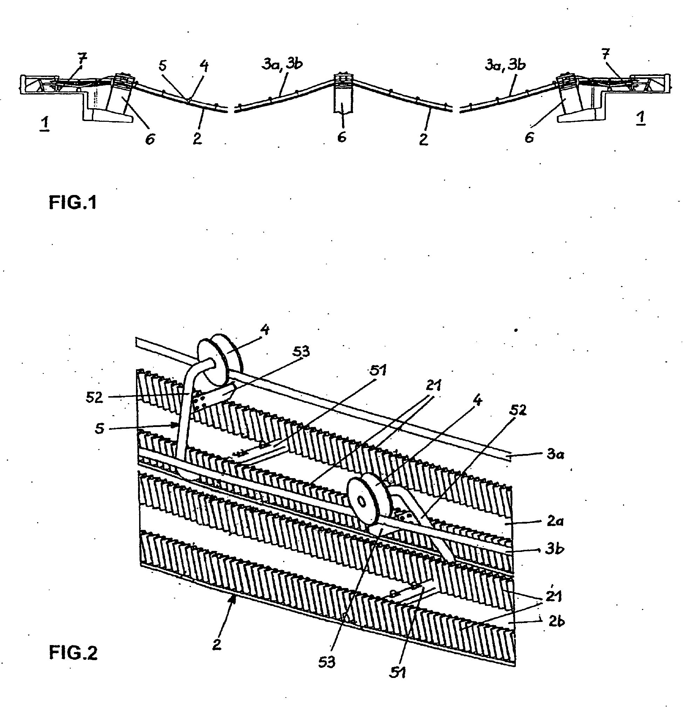

Wie dies aus Fig.2 ersichtlich ist, ist das Förderband 2 mit Wellkanten 21 ausgebildet. Aufgrund der in den Endstationen 1 erfolgenden Führung des Förderbandes 2 über die um vertikale Achsen verdrehbaren Umlenktrommeln 7 befinden sich die beiden Trume 2a und 2b des Förderbandes 2 in der gleichen Höhenlage. Die Tragbügel 5 sind angenähert L-förmig abgewinkelt, wobei die angenähert horizontalen Schenkel 51 mit dem Förderband 2 fest verbunden sind und am oberen Ende der schräg nach oben ragenden Schenkel 52 die Tragrollen 4 gelagert sind, welche am dem jeweiligen Trum 2a, 2b zugeordneten Tragseil 3a, 3b abrollen. An den nach oben abragenden Schenkeln 52 der Tragbügel 5 sind weiters quer abragende Führungsplatten 53 befestigt, welche sich unterhalb der Tragrollen 4 befinden und welche dazu dienen, Seilentgleisungen zu verhindern. Die Führungsplatten 53, welche aus Gummi hergestellt sind, weisen gegenüber Belastungen in Richtung ihrer Ebene eine hohe Steifigkeit auf, wodurch sie eine Führung der Laufrollen 4 an den Tragseilen 3a, 3b gewährleisten. Demgegenüber sind sie aus ihrer Ebene elastisch ausbiegbar, wodurch gewährleistet ist, dass in den Endstationen die Laufrollen 4 von den Tragseilen 3a, 3b abgehoben werden können.

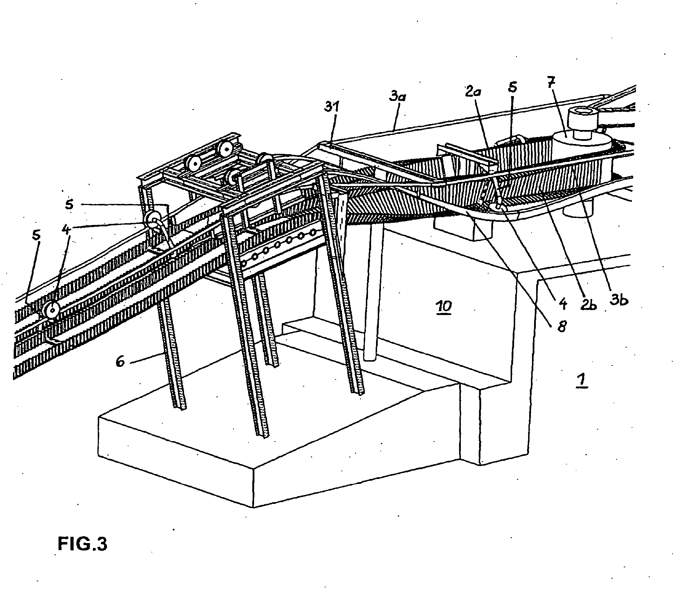

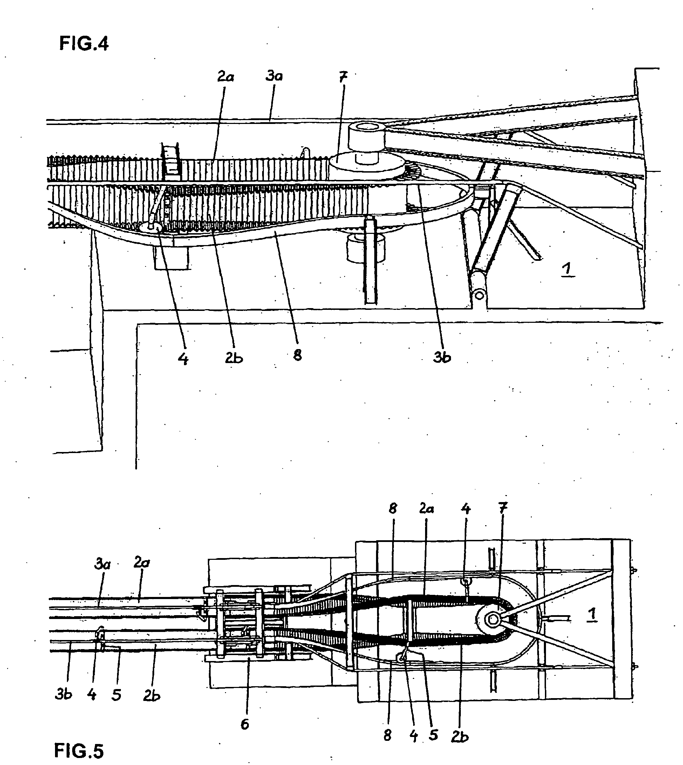

Wie dies insbesondere aus den Fig.3 bis 6 ersichtlich ist, ist das Förderband 2 in den Endstationen 1 über jeweils eine um eine vertikale Achse verdrehbare Umlenktrommel 7 geführt. Dabei wird das zur Umlenktrommel 7 hinbewegte Trum 2b des Förderbandes 2 aus der horizontalen Ebene in eine vertikale Ebene verschwenkt und wird es in dieser Lage um die Umlenktrommel 7 herum bewegt. In der Folge wird das von der Umlenktrommel 7 weg bewegte Trum 2a des Förderbandes 2 wieder in die horizontale Ebene verschwenkt. Die Verschwenkungen erfolgen dabei in derjenigen Weise, dass bei beiden Trumen 2b und 2a die Förderseite des Förderbandes 2 nach oben gerichtet ist. Die beiden Tragseile 3a, 3b sind im Fundament 10 der Endstation abgespannt.

In den Endstationen 1 sind den Tragrollen 4 zugeordnete Führungsschienen 8 vorgesehen, durch welche die Verschwenkung des Förderbandes 2 in den Bereichen der Endstationen 1 der Anlage gesteuert wird. Zudem ist in den Bereichen zwischen den Traggerüsten 6 und den Umlenktrommeln 7 zwischen den beiden Tragseilen 3a und 3b ein Stützbalken 31 vorgesehen, durch welchen die beiden Seile 3a und 3b so voneinander im Abstand gehalten sind, dass dazwischen der für die Führungsschiene 8 erforderliche Platz zur Verfügung steht und weiters bei der Verschwenkung des Förderbandes 2 sowie der an diesem befestigten Bügel 5 und den an diesen gelagerten Tragrollen 4 vermieden wird, daß die Tragrollen 4 mit den Tragseilen 3a, 3b kollidieren.

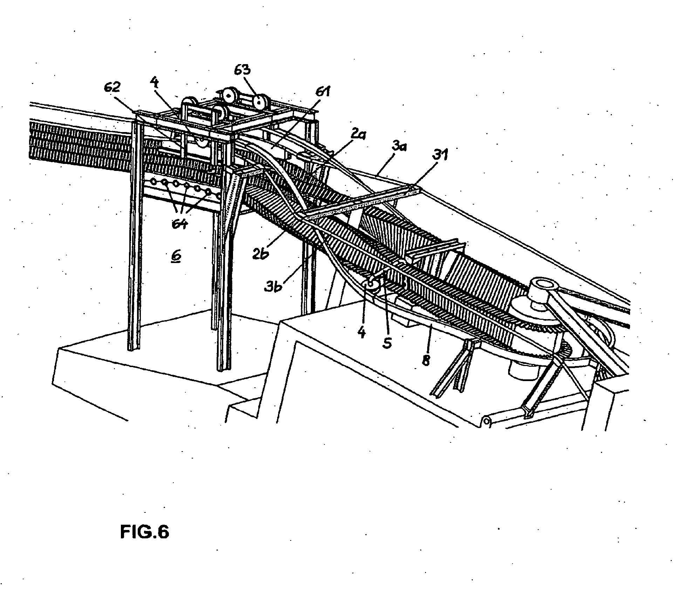

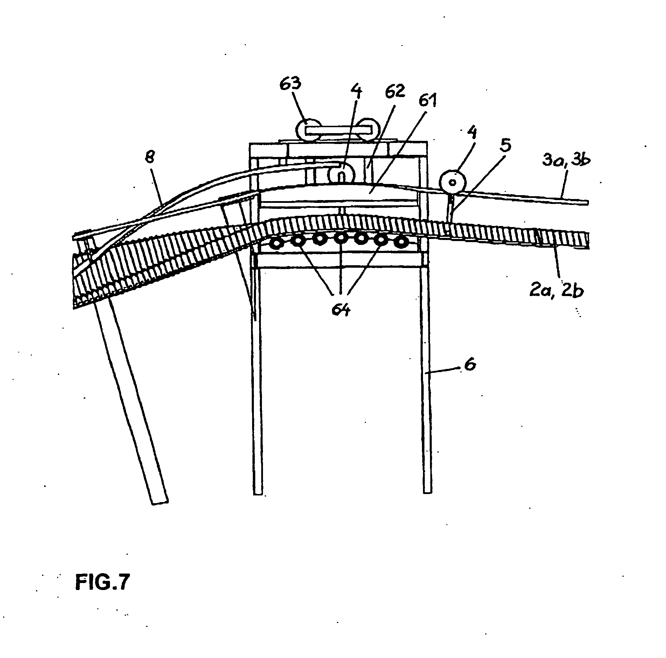

Wie dies aus den Fig.6 bis Fig. 8 ersichtlich ist, sind in den Traggerüsten 6 Abstützungen 61 vorgesehen, über welche die Tragseile 3a und 3b geführt sind und durch welche deren Höhenlage bestimmt ist. Die Abstützungen 61 sind dabei an Traggestellen 62 angeordnet, welche mittels Laufrollen 63 in der Richtung der Tragseile 3a, 3b verfahrbar sind. Hierdurch erfolgt ein Ausgleich der auf beiden Seiten der Stützen 6 auftretenden Seilkräfte. Derartige Abstützungen sind bei allen Traggerüsten 6 vorgesehen.

Weiters sind in sämtlichen Traggerüsten 6 mehrere Stützwalzen 64 gelagert, über welche die beiden Trume 2a, 2b des Förderbandes 2 geführt sind, wodurch die Höhenlage des Förderbandes 2 bestimmt ist. Durch die Stützwalzen 64 werden die beiden Trume 2a und 2b des Förderbandes 2 abgestützt, wodurch die durch das Förderband 2 verursachten Belastungen unmittelbar von den Traggerüsten 6 aufgenommen werden. Hierdurch werden die Tragrollen 4 entlastet. Zudem wird das sich zur Umlenktrommel 7 hin bewegende Trum 2a des Förderbandes 2 im Bereich des Traggerüstes 6 angehoben. Die in den Endstationen vorgesehenen Führungsschienen 8 beginnen und enden oberhalb der Abstützungen 61 bzw. der Stützwalzen 64. Mit dem Förderband 2 werden auch die Tragrollen 4 angehoben, wodurch sie vom Tragseil 3a abgehoben werden und in die Führungsschienen 8 hinein geleitet werden, durch welche sie während ihrer Bewegung durch die Endstationen 1 hindurch geführt werden. Ebenso werden hierdurch die aus den Führungsschienen 8 herauslaufenden Tragrollen 4 so geführt, dass sie auf das auf die Abstützungen 61 aufliegende Tragseil 3b gelangen.

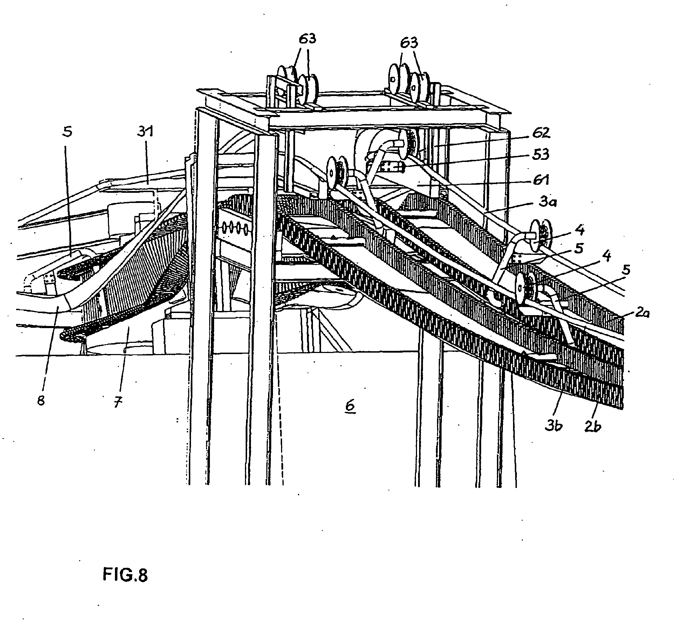

Wie dies weiters aus Fig.8 ersichtlich ist, laufen bei der Bewegung in die Endstationen 1 die Führungsplatten 53 auf die Abstützungen 61 auf, wodurch sie aus ihrer Ebene herausgebogen werden. Hierdurch werden sie vom Tragseil 3a entfernt, wodurch die Tragrollen 4 vom Tragseil 3a abgehoben werden können. Ebenso werden die von den Endstationen 1 wegbewegten Führungsplatten 53 vorerst durch die Abstützungen 61 abgebogen und gelangen sie in der Folge wieder unter das Tragseil 2b. Die an den längs der Strecke befindlichen Traggerüsten 6 vorgesehenen Abstützungen 61 wirken in der gleichen Weise.

Durch die Führungsschienen 8 wird die Schwenkbewegung des Förderbandes 2 aus dessen horizontaler Lage in dessen vertikale Lage und hierauffolgend wieder in die horizontale Lage gesteuert. Dabei erfolgt die Schwenkbewegung des Förderbandes 2 derart, dass auch bei dem von der Entladestation zur Ladestation sich zurückbewegenden Trum des Förderbandes 2 dessen Förderseite nach oben gerichtet ist. Hierdurch wird gewährleistet, dass am Förderband 2 verbliebene Anteile des Fördergutes am zurücklaufenden Trum des Förderbandes 2 verbleiben, wodurch auf Maßnahmen zum Schutz der unterhalb der Förderanlage befindlichen Bereiche verzichtet werden kann.

Ergänzend wird darauf verwiesen, dass die Seitenwände des Förderbandes nicht als Wellkanten ausgebildet zu sein brauchen. Vielmehr können sie z.B. auch mit von oben nach unten durchgehenden Schlitzen ausgebildet sein, wodurch sie gleichfalls um die Umlenktrommeln herum bewegbar sind.
Weiters kann eine derartige Förderanlage auch so ausgebildet sein, dass beide Endstationen sowohl als Ladestation als auch als Entladestation ausgebildet sind, wobei mittels der beiden Trume eine Förderung von Gütern in beiden Bewegungsrichtungen des Förderbandes erfolgt.

## Patentansprüche

1. Anlage zur Förderung von Gütern mittels eines in sich geschlossenen Förderbandes [2], welches in den Endstationen [1] über Umlenktrommeln (7) geführt ist und welches mit längs Tragseilen [3a, 3b] verfahrbaren Tragrollen (4) ausgebildet ist, **dadurch gekennzeichnet, dass** jedem Trum (2a, 2b) des Förderbandes (2) nur ein einziges, oberhalb des betreffenden Trumes (2a, 2b) befindliches Tragseil [3a, 3b] zugeordnet ist und dass am Förderband [2] nach oben abrageride Tragbügel (5) befestigt sind, an deren oberen Enden die Tragrollen (4) gelagert sind.

2. Anlage nach Patentanspruch 1, **dadurch gekennzeichnet, dass** die in den Endstationen [1] befindlichen Umlenktrommeln [7] um angenähert vertikale Achsen verdrehbar sind.

3. Anlage nach einem der Patentansprüche 1 und 2, **dadurch gekennzeichnet, dass** das Förderband (2) mit Wellkanten [21] ausgebildet ist.

4. Anlage nach einem der Patentansprüche 1 bis 3, **dadurch gekennzeichnet, dass** die Tragbügel (5) abgewinkelt ausgebildet sind, wobei der angenähert waagrecht ausgerichtete Schenkel (51) mit dem Förderband (2) fest verbunden ist und am oberen Ende des von diesem Schenkel [51] nach oben abragenden zweiten Schenkels [52] mindestens eine Tragrolle (4) gelagert ist.

5. Anlage nach einem der Patentansprüche 1 bis 4, **dadurch gekennzeichnet, dass** in den Endstationen (1) den Tragrollen (4) zugeordnete Führungsschienen (8) angeordnet sind, mittels welcher die Tragbügel (5) so geführt werden, dass das Förderband [2] aus seiner angenähert horizontalen Lage in eine angenähert vertikale Lage verschwenkt wird, in welcher es um die Umlenktrommeln [7] herumbewegt wird, worauf es wieder in die angenähert horizontale Lage verschwenkt wird, wobei bei beiden Trumen [2a, 2b] die Förderseite des Förderbandes (2) nach oben gerichtet ist.

6. Anlage nach einem der Patentansprüche 1 bis 5, **dadurch gekennzeichnet, dass** an jedem Tragbügel [5] unterhalb der Tragrolle (4) eine insbesondere aus Gummi hergestellte Führungsplatte (53) vorgesehen ist.

7. Anlage nach einem der Patentansprüche 1 bis 6, **dadurch gekennzeichnet, dass** die Tragseile (3a, 3b) im Bereich der Stützen (6) über Abstützungen (61) geführt sind, welche in Längsrichtung der Tragseile (3a, 3b) verfahrbar sind.

8. Anlage nach einem der Patentansprüche 1 bis 7, **dadurch gekennzeichnet, dass** das Förderband (2) im Bereich der Stützen (6) über Stützwalzen (64) geführt ist.

## Claims

1. An installation for conveying goods by means of an endless conveyor belt (2), which is guided in the end stations (1) over return drums (7) and which is constructed with carrying rollers (4) which are capable of travelling along carrying cables (3a, 3b), **characterised in that** just one single carrying cable (3a, 3b) located above the relevant run (2a, 2b) of the conveyor belt (2) is associated with each run (2a, 2b) and **in that** upwardly projecting support brackets (5) are attached to the conveyor belt (2), the carrying rollers (4) being mounted at the upper ends of said brackets (5).

2. An installation according to claim 1, **characterised in that** the return drums (7) located in the end stations (1) may be rotated about approximately vertical axes.

3. An installation according to either one of claims 1 and 2, **characterised in that** the conveyor belt (2) is constructed with corrugated side walls (21).

4. An installation according to any one of claims 1 to 3, **characterised in that** the support brackets (5) are of angled construction, wherein the approximately horizontally oriented arm (51) is connected fixedly with the conveyor belt (2) and at least one carrying roller (4) is mounted at the upper end of the second arm (52) projecting upwards from said arm (51).

5. An installation according to any one of claims 1 to 4, **characterised in that** guide rails (8) associated with the carrying rollers (4) are arranged in the end stations (1), by means of which guide rails (8) the support brackets (5) are guided in such a way that the conveyor belt (2) is swivelled out of its approximately horizontal position into an approximately vertical position in which it is moved round the return drums (7), whereupon it is swivelled back into the approximately horizontal position, wherein the conveying side of the conveyor belt (2) is directed upwards in both runs (2a, 2b).

6. An installation according to any one of claims 1 to 5, **characterised in that** a guide plate (53), made in particular of rubber, is provided on each support bracket (5) under the carrying roller (4).

7. An installation according to any one of claims 1 to 6, **characterised in that** the carrying cables (3a, 3b) are guided over supports (61) in the area of the towers (6), which supports (61) are movable in the longitudinal direction of the carrying cables (3a, 3b).

8. An installation according to any one of claims 1 to 7, **characterised in that** the conveyor belt (2) is guided over supporting rolls (64) in the area of the towers (6) .

## Revendications

1. Installation pour le transport de produits au moyen d'une bande transporteuse sans fin (2) qui passe sur des tambours de renvoi (7), dans les stations d'extrémité (1), et qui est pourvue de poulies porteuses (4) mobiles le long de câbles porteurs (3a, 3b),
**caractérisée en ce qu'**il n'est prévu pour chaque brin (2a, 2b) de la bande transporteuse (2) qu'un seul câble porteur (3a, 3b), situé au-dessus du brin concerné (2a, 2b), et **en ce qu'**il est prévu, fixés à la bande transporteuse (2), des étriers de suspension (5) qui dépassent vers le haut et sur les extrémités supérieures desquelles sont montées les poulies porteuses (4).

2. Installation selon la revendication 1, **caractérisée en ce que** les tambours de renvoi (7) qui se trouvent dans les stations d'extrémité (1) sont aptes à tourner sur des axes approximativement verticaux.

3. Installation selon la revendication 1 ou 2, **caractérisée en ce que** la bande transporteuse (2) est pourvue de bords ondulés (21).

4. Installation selon l'une des revendications 1 à 3, **caractérisée en ce que** les étriers de suspension (5) ont une forme coudée, étant précisé que la branche à peu près horizontale (51) est solidaire de la bande transporteuse (2) et qu'au moins une poulie porteuse (4) est montée sur l'extrémité supérieure de la seconde branche (52) qui dépasse de ladite branche (51) vers le haut.

5. Installation selon l'une des revendications 1 à 4, **caractérisée en ce qu'**il est prévu dans les stations d'extrémité (1) des rails de guidage (8) qui sont associés aux poulies porteuses (4) et grâce auxquels les étriers de suspension (5) sont guidés de manière à faire pivoter la bande transporteuse (2) de sa position approximativement horizontale vers une position approximativement verticale dans laquelle elle passe autour des tambours de renvoi (7), après quoi elle pivote à nouveau vers la position approximativement horizontale, étant précisé que sur les deux brins (2a, 2b), le côté transport de la bande transporteuse (2) est dirigé vers le haut.

6. Installation selon l'une des revendications 1 à 5, **caractérisée en ce qu'**il est prévu sur chaque étrier de suspension (5), sous la poulie porteuse (4), une plaque de guidage (53) qui est fabriquée en particulier en caoutchouc.

7. Installation selon l'une des revendications 1 à 6, **caractérisé en ce que** les câbles porteurs (3a, 3b), dans la zone des montants (6), passent sur des supports (61) qui sont mobiles dans le sens longitudinal des câbles porteurs (3a, 3b).

8. Installation selon l'une des revendications 1 à 7, **caractérisée en ce que** la bande transporteuse (2), dans la zone des montants (6), passe sur des rouleaux de support (64).
